# FASCICULE DE BREVET EUROPEEN

(11) **EP 4 393 309 B1**
(45) Date de publication et mention de la délivrance du brevet: **11.02.2026**
(21) Numéro de dépôt: 23220468.5
(22) Date de dépôt: 28.12.2023
(51) Int. Cl.: A23C 1/00, A23C 9/16, A23C 9/18

(54) **PROCÉDÉ DE FABRICATION DE LAIT EN POUDRE**
VERFAHREN ZUR HERSTELLUNG VON MILCHPULVER
METHOD FOR PRODUCING MILK POWDER

(30) Priorité: 28.12.2022 BE 202206097
(43) Date de publication de la demande: 03.07.2024
(73) Titulaire: Solarec, 6800 Recogne (BE)
(72) Inventeur: DIEUDONNÉ, Cédric Roch Françoise Gislain, 6800 Recogne (BE); GEORGES, Patrick Jean Fernand Gislain, 6800 Recogne (BE); SNEESSENS, Benjamin Baudoin Jonathan Marie, 6800 Recogne (BE)
(74) Mandataire: Calysta NV

(56) Documents cités:
- CN-A- 107 279 284
- CN-A- 111 213 712
- S�RENSEN IDA ET AL: "Storage stability of whole milk powder produced from raw milk reverse osmosis retentate", DAIRY SCIENCE & TECHNOLOGY, INSTITUT NATIONAL DE LA RECHERCHE AGRONOMIQUE, INRA, FR, vol. 96, no. 6, 19 December 2016 (2016-12-19), pages 873 - 886, XP036165710, ISSN: 1958-5586, [retrieved on 20161219], DOI: 10.1007/S13594-016-0309-Y
- WALMSLEY TIMOTHY G ET AL: "Process and utility systems integration and optimisation for ultra-low energy milk powder production", ENERGY, ELSEVIER, AMSTERDAM, NL, vol. 146, 26 April 2017 (2017-04-26), pages 67 - 81, XP085355195, ISSN: 0360-5442, DOI: 10.1016/J.ENERGY.2017.04.142
- ANONYMOUS: "Re-design of the dairy industry for sustainable milk processing | SUSMILK | Project | News & Multimedia | FP7 | CORDIS | European Commission", 9 March 2017 (2017-03-09), XP093060354, Retrieved from the Internet <URL:https://cordis.europa.eu/project/id/613589/reporting> [retrieved on 20230703]
- ANONYMOUS: "SUSmilk", 9 March 2017 (2017-03-09), XP093060353, Retrieved from the Internet <URL:https://cordis.europa.eu/docs/results/613/613589/final1-susmilk-dissemination-material-complete-final.pdf> [retrieved on 20230703]
- DESHWAL GAURAV KR ET AL: "Applications of reverse osmosis in dairy processing: an Indian perspective", JOURNAL OF FOOD SCIENCE AND TECHNOLOGY, SPRINGER (INDIA) PRIVATE LTD, INDIA, vol. 58, no. 10, 21 January 2021 (2021-01-21), pages 3676 - 3688, XP037535785, ISSN: 0022-1155, [retrieved on 20210121], DOI: 10.1007/S13197-020-04958-6
- FINNEGAN WILLIAM ET AL: "Environmental impacts of milk powder and butter manufactured in the Republic of Ireland", SCIENCE OF THE TOTAL ENVIRONMENT, vol. 579, 11 November 2016 (2016-11-11), pages 159 - 168, XP029867696, ISSN: 0048-9697, DOI: 10.1016/J.SCITOTENV.2016.10.237

## Description

### Domaine technique

La présente invention concerne un procédé pour la production de lait en poudre.

### L'art antérieur

Il est bien connu de l'état de la technique que le séchage du lait pour obtenir du lait en poudre permet d'augmenter son temps de conservation et de faciliter son transport, notamment en diminuant la quantité de matière à transporter. Ainsi, en conservant les mêmes propriétés nutritionnelles, le lait en poudre occupe jusqu'à 80% de volume en moins que le lait liquide initial et présente une durée de conservation bien supérieure ainsi que des conditions de conservation beaucoup moins contraignantes.

Toutefois, les procédés de séchage du lait nécessitent des installations importantes et une quantité d'énergie élevée, aussi, elles ne sont généralement pas accessibles aux agriculteurs directement, qui commercialisent alors leur production à des acteurs de la transformation du lait, par exemple pour faire du lait en poudre

Ces acteurs de la transformation collectent ainsi le lait auprès des agriculteurs, souvent à l'aide de camion-citerne. Le lait ainsi collecté est alors rassemblé et introduit dans une installation dans laquelle est mis en œuvre le procédé qui permet la fabrication du lait en poudre.

Ainsi, l'équilibre entre l'énergie consommée pour la fabrication du lait en poudre, pour la conservation et la collecte doit être ajusté au maximum vu les contraintes énergétiques actuelles. Il est typiquement admis que les collectes doivent être ainsi réalisées dans un rayon raisonnable.

On peut catégoriser les acteurs de la transformation du lait dans deux catégories.

On a ainsi les acteurs de la transformation du lait qui produisent des produits de spécialité et les acteurs de la transformation du lait qui produisent des produits de commodité.

En effet, certains acteurs de la transformation du lait ont opté pour des formulations de spécialité, à savoir des produits à plus haute valeur ajoutée comme des laits en poudre enrichis en protéines, comme par exemple des protéines de blé, des lait en poudre sans lactose, etc.

On connait par exemple du document EP3298903 un lait en poudre obtenu à partir de lait liquide qui est soumis à une étape de microfiltration pour diminuer la présence de germes et de spores et dans lequel des protéines de blé sont ajoutées.

D'autres ont développé des laits en poudre à destination des bouillies pour enfants en formulant pour avoir soit un épaississement de la bouillie, soit en travaillant sur la vitesse de dissolution du lait ou sa capacité à ne pas former de grumeaux, voir par exemple le document WO2006032797 qui décrit un procédé de préparation d'un produit en poudre comprenant une étape thermomécanique qui peut également s'appliquer à la production de lait en poudre

Bien entendu, ces acteurs de la transformation du lait disposent de marges plus confortables qui leur donne plus de latitude dans le choix de leurs étapes de traitement pour fabriquer la poudre.

En ce qui concerne les acteurs de la transformation du lait qui produisent des produits de commodité, comme par exemple des laits en poudre à destination de l'industrie agroalimentaire, les laits en poudre contiennent typiquement les mêmes substances nutritionnelles que le lait liquide, même s'il est parfois écrémé totalement ou partiellement.

Les acteurs de la transformation du lait à destination de l'industrie agroalimentaire, parce que leur lait est aujourd'hui perçu comme un produit de commodité, voire de première nécessité font face à des marges qui ont été, au fils des années, extrêmement réduites.

Ces acteurs de la transformation du lait n'ont donc pas la même latitude et doivent contrôler leur procédé parfaitement.

Comme on le comprend, les acteurs de la transformation du lait à destination de l'industrie agroalimentaire ont de nombreux enjeux économiques à gérer afin de ne pas consommer en transport le gain potentiel qui pourrait être réalisé en transformant une plus grande quantité de lait. De plus, ces acteurs ont la contrainte de rémunérer décemment les agriculteurs tout en offrant un prix raisonnable à leurs clients finaux.

En parallèle, le lait est une substance produite naturellement pas l'animal, plus particulièrement par la vache, sans toutefois y être limité. Or ces animaux ne vivent pas dans des conditions aseptisées et même si la traite des animaux est de plus en plus effectuée dans des conditions d'hygiène améliorées, le lait issu de la traite contient des germes et éventuellement des spores de ces germes qui imposent un traitement du lait rapidement après sa production.

Le document CN112136899 décrit un lait en poudre à destination de l'industrie agro-alimentaire et un procédé de préparation permettant de l'obtenir. Il est fait mention des nombreuses contraintes permettant d'obtenir un lait de qualité, à savoir des étapes de séchage à basse température ainsi que l'emploi de lait récent.

Selon ce document CN 112136899, mais aussi selon les documents EP3298903 ou WO 2006/032797, l'absence de germe et de bactérie est atteinte par la rapidité avec laquelle le lait est traité de sa production jusqu'à l'obtention du lait en poudre. Cette diligence implique de n'engager dans un procédé d'obtention de lait en poudre que du lait le plus frais possible et par conséquent collecté dans une zone de production relativement proche du site de séchage.

Malheureusement, ceci limite fortement la capacité à fournir de manière viable et/ou durable une production industrielle de lait en poudre, en particulier à destination de l'industrie agro-alimentaire. En effet, la viabilité de ce type de procédé requiert ainsi des collectes de grandes quantités, qui poussent à l'élevage intensif pour augmenter la quantité de lait produite afin d'obtenir la taille critique pour qu'il puisse être collecté le plus frais possible, mettant ainsi à mal le critère de durabilité. De plus, **il** requiert toujours la proximité avec un acteur de la transformation du lait, sans quoi **il** n'est pas collecté. Enfin, le capex d'une installation de séchage du lait est important et cette installation doit être de grande dimension pour pouvoir être rentable.

SØRENSEN IDA ET AL., dans "Storage stability of whole milk powder produced from raw milk reverse osmosis retentate", DAIRY SCIENCE & TECHNOLOGY, INSTITUT NATIONAL DE LA RECHERCHE AGRONOMIQUE, INRA, FR, vol. 96, no. 6, 19 décembre 2016, pages 873-886, décrivent la mise en place d'un système de filtration par osmose inverse dans les exploitations laitières afin de réduire le volume de lait à **transporter,** et donc potentiellement la consommation d'énergie et les émissions de CO2.

De manière similaire, les procédés de l'état de la technique présentent certaines limitations et contraintes qui ont pour résultat qu'ils ne peuvent pas toujours être appliqués dans des zones où l'élevage est de taille raisonnable, où il n'y a pas la proximité suffisante avec un acteur de la transformation du lait, ou encore qu'il n'y a pas suffisamment d'installations agricoles permettant d'obtenir une taille critique de collecte qui rend en parallèle l'investissement dans l'installation de séchage viable industriellement.

### Bref résumé de l'invention

L'objet de l'invention est de fournir un procédé pour la production de lait en poudre, viable même lorsqu'il est mis en œuvre pour produire du lait à destination de l'industrie agro-alimentaire, pour tous les acteurs de la chaîne de valeur, à savoir pour le producteur de lait, pour les acteurs de la transformation du lait et pour le consommateur tout en étant approprié pour des zones où la durabilité est importante, comme par exemple où l'élevage est de taille raisonnable, ou bien pour des zones moins peuplées en installations agricoles mettant en œuvre l'élevage et permettant de fournir un lait en poudre de qualité et présentant une quantité de germes et de bactéries en accord avec les standard réglementaires.

Pour résoudre ce problème, il est prévu suivant l'invention un procédé de production de lait en poudre à partir d'une série de fractions de lait entier produit par une série de cheptels de vaches laitières d'une série de sites de production, chaque cheptel de vaches laitières étant localisé en un site de production, identique ou différent, le procédé comprenant les étapes suivantes :
- une étape de collecte d'une série de fractions de lait entier de la série de sites de production avec déplacement de ladite série de fractions de lait entier sur une première distance pour amener la série de fractions de lait entier à un site de rassemblement,
- une étape de rassemblement des fractions de ladite série de fractions de lait entier pour former un lot de lait au site de rassemblement,
- une étape de concentration du lait à un site de séchage,
- une étape de séchage du lait concentré par pulvérisation dans une installation de séchage au site de séchage avec obtention de lait en poudre présentant une teneur en matière sèche de plus de 95% en poids par rapport au poids de lait en poudre, plus particulièrement une teneur en matière sèche de plus de 96% en poids par rapport au poids de lait en poudre, de préférence de plus de 97% en poids par rapport au poids de lait en poudre, de préférence de plus de 98% en poids par rapport au poids de lait en poudre.

Ce procédé est caractérisé en ce que ladite série de fractions de lait entier de l'étape de collecte et de l'étape de rassemblement est une série de fractions de lait entier maturé, le procédé comprenant en outre, préalablement à la collecte, une série d'étapes de maturation de chaque fraction de lait entier de ladite série de fractions de lait entier au site de production, pour former la série de fractions de lait entier maturé, et postérieurement à l'étape de rassemblement, successivement, une étape de préconcentration du lot de lait au site de rassemblement jusqu'à obtention d'un lait préconcentré comprenant de 30 à 38% en poids de matière sèche par rapport au poids de lait préconcentré, plus particulièrement de 32 à 36% en poids de matière sèche par rapport au poids de lait préconcentré, de préférence 34% en poids de matière sèche par rapport au poids de lait préconcentré, l'étape de préconcentration du lait comprend :
- un passage de lait du lot de lait, dans un premier étage d'un système à osmose inverse formant un premier préconcentrat,
- un passage d'un (x-1)^{ième} préconcentrat dans un x^{ième} étage dudit système à osmose inverse, chaque xième étage dudit système à osmose inverse formant un x^{ième} préconcentrat, où x est compris entre 2 et 10, de préférence entre 2 et 9, plus particulièrement entre 4 et 8, encore plus particulièrement entre 5 et 7,
- un passage dans un dernier étage dudit système à osmose inverse du préconcentrat précédent dans lequel la pression en fin de dernier étage est comprise entre 43 et 55 bar, plus particulièrement entre 44 et 52 bar, de préférence entre 45 et 50 bar, formant le lait préconcentré,

- une étape de déplacement du lait préconcentré du site de rassemblement vers le site de séchage distant du site de rassemblement d'une deuxième distance, supérieure à la première distance,
- et dans lequel, l'étape de concentration du lait au site de séchage est une étape de concentration du lait préconcentré audit un site de séchage jusqu'à obtention d'un lait concentré comprenant de 50 à 57% en poids de matière sèche par rapport au poids de lait concentré, plus particulièrement de 52 à 56% en poids de matière sèche par rapport au poids de lait concentré, de préférence de 54% en poids de matière sèche par rapport au poids de lait concentré.

De façon surprenante, Il a en effet été mis en évidence, contrairement à l'enseignement du document CN112136899 que l'utilisation de lait ayant maturé au site de production n'augmente pas la présence de germe et/ou de bactéries dans le lait de manière telle que les standard réglementaires ne seraient plus rencontrés, permettant ainsi d'espacer les collectes jusqu'à 3 jours sans dégrader la qualité des fractions du lait entier collectées.

Ainsi, la maturation permettant d'espacer les collectes dans le temps permet de diminuer la consommation énergétique de la collecte à plusieurs niveaux. Les camions citernes (réfrigérés/thermostatisés) collectent plus de lait en une fois, en un nombre de localisation restreint, ce qui diminue la longueur du déplacement, mais aussi le nombre d'arrêt et de redémarrage du camion-citerne, le nombre d'arrêt et de mise en marche du dispositif de pompage mais diminue aussi la durée de la collecte et ainsi la main d'œuvre requise.

De plus, pour l'installation agricole où se trouve le cheptel de vaches laitières, les coûts sont aussi diminués.

En effet, dans l'installation agricole, les vaches laitières du cheptel sont traites chaque jour et les fractions de lait issues de la traite sont rassemblées dans un conteneur réfrigéré. à la suite de la collecte des fractions de lait entier produit par le cheptel au site de production, il est nécessaire de procéder à un nettoyage complet du conteneur. Ce nettoyage nécessite de l'énergie, en particulier pour stériliser le conteneur, de la main d'œuvre et des produits nettoyant. Le fait de ne pas collecter le lait tous les jours permet de diminuer la fréquence de ces nettoyage et ainsi d'augmenter la rentabilité du procédé de production de lait en poudre en comparaison d'un procédé similaire où le lait ne serait pas maturé et serait collecté tous les jours.

Dans le procédé selon la présente invention, la série de fractions de lait entier collectée par un ou plusieurs camion(s)-citerne(s), par exemple des camion(s)-citerne(s) d'une capacité de 30 à 50 T de la série de sites de production est acheminé sur une première distance au site de rassemblement, où les fractions collectées par un ou plusieurs camion(s)-citerne(s) sont rassemblées pour former un lot de lait au site de rassemblement.

Au site de rassemblement, le lot de lait est soumis à une étape de préconcentration jusqu'à obtenir un lait préconcentré comprenant de 30 à 38% en poids de matière sèche par rapport au poids de lait préconcentré, plus particulièrement de 32 à 36% en poids de matière sèche par rapport au poids de lait préconcentré, de préférence 34% en poids de matière sèche par rapport au poids de lait préconcentré. La préconcentration permet donc permet de retirer une partie de l'eau présente dans le lait et d'obtenir un volume de lait préconcentré correspondant à environ un tiers du volume du lot de lait maturé engagé dans l'étape de préconcentration.

Selon la présente invention, le système d'osmose inverse à plusieurs étages, par exemple comprenant de 8 à 12 étages, est mis en œuvre de manière telle que les étages sont utilisés en série que le préconcentrat issu d'un étage devient le liquide d'alimentation pour l'étage suivant. Ces étapes supplémentaires augmentent le taux de récupération du système.

De préférence, le nombre d'étapes du système d'osmose inverse selon la présente invention est compris entre 8 et 12 étages.

L'utilisation d'un système à osmose inverse comprenant plusieurs étages mis en œuvre de manière séquentielle présente l'avantage de pouvoir moduler la pression appliquée au sein du dispositif permettant ainsi de contrôler la quantité d'eau retirée du lait.

Le lait préconcentré peut ainsi être déplacé au site de séchage où se trouve l'installation de séchage. Au site de séchage, le lait préconcentré est soumis à l'étape de concentration du lait jusqu'à obtention d'un lait concentré comprenant de 50 à 57% en poids de matière sèche par rapport au poids de lait concentré, plus particulièrement de 52 à 56% en poids de matière sèche par rapport au poids de lait concentré, de préférence 54% en poids de matière sèche par rapport au poids de lait concentré. La présente d'une étape de préconcentration jusqu'à obtenir une teneur en matière sèche entre 32 et 36% en poids, par rapport au poids de lait préconcentré, permet de pousser la concentration jusqu'à obtenir une teneur en matière sèche comprise entre 50 et 57 % en poids par rapport au poids de lait concentré, plus particulièrement entre 52 et 56% en poids par rapport au poids de lait concentré, plus particulièrement d'environ 54% en poids par rapport au poids de lait concentré.

Le lait concentré est alors introduit dans la installation de séchage dans laquelle il est soumis au séchage jusqu'à obtention de lait en poudre présentant une teneur en matière sèche de plus de 95% en poids par rapport au poids de lait en poudre, plus particulièrement une teneur en matière sèche de plus de 96% en poids par rapport au poids de lait en poudre, de préférence de plus de 97% en poids par rapport au poids de lait en poudre, voire même de plus de 98% en poids par rapport au poids de lait en poudre.

Ainsi, au départ d'un lait concentré présentant une teneur en matière sèche comprise entre 50 et 57 % en poids par rapport au poids de lait concentré, plus particulièrement entre 52 et 56% en poids par rapport au poids de lait concentré, plus particulièrement d'environ 54% en poids par rapport au poids de lait concentré, la durée du séchage est réduite ainsi que l'énergie consommée en comparaison de procédé ne comprenant qu'une seule étape de concentration.

Ainsi, selon la présente invention, le site de séchage est distant du site de rassemblement d'une deuxième distance, supérieure à la première distance correspondant à la distance parcourue au sein du rayon de collecte autour du site de rassemblement.

Le site de séchage comprend une installation de concentration et la tour de séchage. Le site de séchage peut ainsi également collecter des fractions de lait auprès des installations agricoles à proximité du site de séchage, c'est-à-dire dans son propre rayon de collecte. Le site de séchage est éventuellement également pourvu d'une installation de préconcentration. Elle peut ainsi concentrer et sécher le lait produit dans les environs mais aussi le lait préconcentré au site de rassemblement. En effet, si le rayon de collecte représente la limite de ce qu'il est rentable de collecter en tenant compte du coût énergétique lié à l'opération de collecte, il est souvent bien compliqué d'augmenter la production du site de séchage car il ne suffit pas d'augmenter la taille de la tour de séchage ou le nombre de tours de séchage, il faut pouvoir assurer l'approvisionnement en fractions de lait. Or dans plusieurs contrées, pour des raisons de durabilité des ressources, l'élevage est de taille raisonnable et la zone définie par le rayon de collecte comporte nécessairement des zones moins peuplées en installations agricoles.

Selon la présente invention, la mise en œuvre d'une étape de pré-concentration sur du lait maturé au site de rassemblement, distant du site de séchage d'une deuxième distance supérieure à la première distante permet simultanément :
- de collecter le lait de manière plus espacée dans le temps qu'une collecte quotidienne, dans un autre rayon de collecte, plus éloigné de ce qui serait normalement considéré comme faisable vu les contraintes liées au transport et à la main d'œuvre,
- de réduire l'empreinte carbone liée au déplacement, sans nécessiter la construction d'une deuxième installation de séchage dans le rayon de collecte, et,
- même dans les zone où l'élevage est de taille raisonnable ou comporte des zones moins peuplées en installations agricoles de produire du lait en poudre de manière rentable, par exemple là où il ne serait même pas possible d'amortir les coûts d'une installation de séchage.

En effet, la réalisation d'une étape de préconcentration au site de rassemblement sur des fractions de lait maturé permet de rendre viable un approvisionnement dans un rayon de collecte éloigné su site de séchage de ladite deuxième distance et donc de mutualiser les coûts liés au site de séchage sur plusieurs rayons de collecte.

L'utilisation des infrastructures du site de séchage pour des producteurs de lait possédant un site de production de lait éloigné dudit site de séchage permet de valoriser le lait produit en lait en poudre. Ceci est particulièrement avantageux pour établir un procédé de production de lait en poudre de manière industrielle viable pour les producteurs. En effet, la transformation de lait en lait en poudre permet d'obtenir un produit à plus haute valeur ajoutée, qui se conserve plus facilement et plus longtemps. En même temps, le procédé selon la présente invention permet une rentabilité améliorée des installations de séchage tout en maintenant la qualité du produit fini pour le consommateur, dès lors que la préconcentration du lait maturé dans le procédé selon la présente invention, contre toute attention, n'a pas d'impact négatif sur les qualités organoleptiques du lait, ni sur les présences de germes et bactéries dans le produit.

Le procédé selon l'invention augmente le nombre de site de production pouvant fournir du lait à engager dans l'étape de séchage. Cela est possible grâce à l'étape de préconcentration de lait maturé qui permet de diminuer la quantité de matière à transporter vers le site de séchage et la fréquence des déplacements entre les sites de production et le site de rassemblement, rendant viable le procédé selon la présente invention.

Les revendications dépendantes se réfèrent à d'autres modes de réalisation avantageux.

Dans un mode de réalisation du procédé selon la présente invention, ladite étape de maturation de chaque fraction de lait entier de ladite série de fractions de lait entier au site de production comprend au moins une première sous-maturation et une deuxième sous-maturation d'une première sous-fraction de chaque fraction de lait entier, chacune d'une durée de 0 à 30 heures, plus particulièrement de 6 à 30 heures, de préférence d'environ 24 heures et une première sous-maturation d'une deuxième sous-fraction de chaque fraction de lait entier d'une durée de 0 à 30 heures, plus particulièrement de 6 à 30 heures, de préférence d'environ 24 heures.

Par exemple, la première sous-fraction subit ainsi deux sous-maturations successives, une première sous-maturation d'une durée comprise entre 0 et 30 heures, plus particulièrement de 6 à 30 heures, de préférence d'environ 24 heures, en fonction de l'heure de la traite et de l'heure de la collecte et une deuxième sous-maturation d'une durée comprise entre 0 et 30 heures, plus particulièrement de 6 à 30 heures, de préférence d'environ 24 heures. Typiquement la première sous-fraction au moment de la collecte est âgée de 48 heures.

La deuxième sous-fraction subit une sous-maturation d'une durée comprise entre 0 et 30 heures, plus particulièrement de 6 à 30 heures, de préférence d'environ 24 heures. La deuxième sous fraction est mélangée à la première sous-fraction dans le conteneur réfrigéré qui se trouve dans l'installation agricole, à savoir au site de production. On appelle typiquement la première sous-fraction la sous-fraction 24-48 h, tandis que la deuxième sous-fraction est typiquement appelée la sous-fraction 0-24 h.

Dans un autre mode de réalisation selon l'invention, ladite étape de maturation de chaque fraction de lait entier de ladite série de fractions de lait entier au site de production comprend au moins une première sous-maturation, une deuxième sous-maturation et une troisième sous-maturation consécutives d'une première sous-fraction de chaque fraction de lait entier, chacune d'une durée de 0 à 30 heures, plus particulièrement de 6 à 30 heures, de préférence d'environ 24 heures, une première sous-maturation et une deuxième sous-maturation consécutives d'une deuxième sous-fraction de chaque fraction de lait entier, chacune d'une durée de 0 à 30 heures, plus particulièrement de 6 à 30 heures, de préférence d'environ 24 heures et une première sous-maturation d'une troisième sous fraction de chaque fraction de lait entier, d'une durée de 0 à 30 heures, plus particulièrement de 6 à 30 heures, de préférence d'environ 24 heures.

Par exemple, la première sous fraction subit ainsi trois sous-maturations successives, une première sous-maturation d'une durée comprise entre 0 et 30 heures, plus particulièrement de 6 à 30 heures, de préférence d'environ 24 heures, en fonction de l'heure de la traite et de l'heure de la collecte, une deuxième sous maturation d'une durée comprise entre 0 et 30 heures, plus particulièrement de 6 à 30 heures, de préférence d'environ 24 heures et une troisième sous-maturation d'une durée comprise entre 0 et 30 heures, plus particulièrement de 6 à 30 heures, de préférence d'environ 24 heures. Typiquement la première sous-fraction au moment de la collecte est âgée de 60 à 72 heures.

La deuxième sous-fraction subit une première sous-maturation d'une durée comprise entre 0 et 30 heures, plus particulièrement de 6 à 30 heures, de préférence d'environ 24 heures, en fonction de l'heure de la traite et de l'heure de la collecte et une deuxième sous maturation d'une durée comprise entre 0 et 30 heures, plus particulièrement de 6 à 30 heures, de préférence d'environ 24 heures. La deuxième sous fraction est mélangée à la première sous fraction dans le conteneur réfrigéré qui se trouve dans l'installation agricole, à savoir au site de production.

La troisième sous-fraction subit une sous-maturation d'une durée comprise entre 0 et 30 heures, plus particulièrement de 6 à 30 heures, de préférence d'environ 24 heures. La troisième sous-fraction est mélangée à la première sous-fraction et à la deuxième sous-fraction dans le conteneur réfrigéré qui se trouve dans l'installation agricole, à savoir au site de production.

On appelle typiquement la première sous-fraction la sous fraction 48-72 h, tandis que la deuxième sous fraction est typiquement appelée la sous-fraction 24-48 heures et la troisième sous-fraction est typiquement appelée la sous-fraction 0-24 heures.

Cela présente l'avantage d'utiliser un lait comprenant plusieurs sous-fractions ayant des durées de maturations différentes. Il est possible, par exemple, sur un site de production, de stocker dans le même contenant la production laitière de plusieurs jours, par exemple la production laitière de 1, 2, 3, 4 jours soit respectivement de 0-24 heures, 24 à 48 heures, 48 à 72 heures. Durant ces plusieurs jours, plusieurs fractions de lait entier sont produites par le cheptel de vaches laitières du site de production. De manière surprenante, ces fractions peuvent être mélangées et stockées ensemble sans entrainer de dégradation des propriétés du lait, notamment par rapport à la quantité de germes et/ou de bactéries présentent dans le lait.

Dans un mode de réalisation, la première sous fraction de chaque fraction de lait entier représente de 30 à 50% de chaque fraction de lait entier de ladite série de lait entier.

Dans un mode de réalisation, la deuxième sous fraction de chaque fraction de lait entier représente de 30 à 50% de chaque fraction de lait entier de ladite série de lait entier.

Dans un mode de réalisation, la troisième sous fraction de chaque fraction de lait entier représente de 30 à 40% de chaque fraction de lait entier de ladite série de lait entier.

Cela présente l'avantage d'utiliser un lait entier comprenant plusieurs sous-fractions ayant une importance relative similaire. Un écart maximal de 10% entre la première, la deuxième et la troisième sous-fraction correspond à un écart classique qui pourrait s'expliquer, par exemple, par une production de lait différente d'un jour à l'autre au sein d'un cheptel de vaches laitières d'un site de production.

Dans un mode de réalisation, la première distance est inférieure à 130 km, plus préférentiellement inférieure à 100 km, plus particulièrement inférieure à 75 km, tout particulièrement inférieure à 50 kilomètres, de préférence inférieure à 40 kilomètres.

Cela présente l'avantage de couvrir une zone assez large pour contenir un nombre de sites de production suffisant pour alimenter de façon régulière le procédé.

Cette distance est également assez courte pour s'assurer que la stabilité du lait est assurée durant ce déplacement et que le coût de son déplacement n'est pas prohibitif pour son exploitation.

Dans un mode de réalisation, le premier étage, les x étages et le dernier étage comprennent un nombre n identique de tubes horizontaux, le passage dans ledit premier étage comprenant une répartition du lot de lait dans les n tubes horizontaux dudit premier étage dudit système à osmose inverse, le passage dans chaque xième étage comprenant une répartition du (x-1)^{ième} préconcentrat dans les n tubes horizontaux, le passage dans le dernier étage dudit système à osmose inverse comprenant une répartition du préconcentrat précédent dans les n tubes horizontaux.

Selon la présente invention, les tubes horizontaux utilisés en parallèle pour chaque étage du système à osmose inverse permettent de traiter un plus grand volume tout en assurant une homogénéité de la qualité du lait préconcentré produit en sortie.

Dans un mode de réalisation, une fraction fluidique sort de chaque tube horizontal, le premier préconcentrat est formé de chacune des fractions fluidiques sortant de n tubes horizontaux du premier étage, rassemblées et homogénéisées, le xième préconcentrat est formé de chacune des fractions fluidiques sortant des n tubes horizontaux du xième étage, rassemblées et homogénéisées, le lait préconcentré étant formé des fractions fluidiques sortant des n tubes horizontaux du dernier étage, rassemblées et homogénéisées.

Cela présente l'avantage de rassembler les fractions de chaque tube avant la répartition dans l'étage suivant de telle manière qu'un préconcentrat homogène entre dans chacun des tubes de l'étage suivant. De cette manière, si quelques tubes ne fonctionnement pas exactement de la même manière dans l'installation à osmose inverse, il n'y a pas de disparité dans le lait préconcentré, celles-ci étant gommées par le rassemblement.

Dans un mode de réalisation, le premier étage comprend t1 tubes horizontaux, les x étages comprennent tx tubes horizontaux et le dernier étage comprend t(x+1) tubes horizontaux, le passage dans ledit premier étage comprenant une répartition du lot de lait dans les t1 tubes horizontaux dudit premier étage dudit système à osmose inverse, le passage dans chaque xième étage comprenant une répartition du (x-1)^{ième} préconcentrat dans les tx tubes horizontaux, le passage dans le dernier étage dudit système à osmose inverse comprenant une répartition du préconcentrat précédent dans les t(x+1) tubes horizontaux, ce qui permet encore d'homogénéiser la qualité et la teneur en matière sèche du lait préconcentré.

Dans un mode de réalisation, une fraction fluidique sort de chaque tube horizontal, le premier préconcentrat est formé de chacune des fractions fluidiques sortant des t1 tubes horizontaux du premier étage, rassemblées et homogénéisées, le xième préconcentrat est formé de chacune des fractions fluidiques sortant des tx tubes horizontaux du xième étage, rassemblées et homogénéisées, le lait préconcentré étant formé des fractions fluidiques sortant des t(x+1) tubes horizontaux du dernier étage, rassemblées et homogénéisées.

Dans un mode de réalisation, chaque xième étage comprend un nombre identique ou différent de tx tubes horizontaux.

Dans un mode de réalisation, la pression en fin de dernier étage est comprise entre 43 et 55 bar, plus particulièrement entre 44 et 52 bar, de préférence entre 45 et 50 bar.

Ces pressions présentent l'avantage de correspondre à un optimum entre le coût de la consommation énergétique nécessaire pour faire fonctionner le dispositif d'osmose inverse et le coût du déplacement d'une quantité de matière. De manière surprenante, il est apparu que le lait concentré obtenu en soumettant le préconcentrat à une pression de 43 et 55 bar, plus particulièrement entre 44 et 52 bar, de préférence entre 45 et 50 bar dans le dernier étage d'un dispositif d'osmose inverse possède une teneur en eau suffisamment élevée pour maintenir la stabilité du lait préconcentré durant l'étape de déplacement et une teneur en eau suffisamment basse pour diminuer son coût de transport par rapport à la plus-value réalisée lors de son traitement.

Dans un mode de réalisation, la deuxième distance est comprise entre 140 et 300 km, de préférence entre 150 et 220 km, préférentiellement entre 160 et 200 km.

Cela présente l'avantage de pouvoir utiliser du lait provenant de site de production situé à une plus grande distance que la première distance du site de séchage. Un déplacement sur de telle distance n'entraine pas de dégradation de la qualité du lait préconcentré et le coût d'un tel déplacement n'est pas prohibitif par rapport à la plus-value réalisée lors du traitement du lait préconcentré.

Il est avantageux de pouvoir intégrer, au moyen d'une étape de préconcentration, à un procédé de production de lait en poudre, du lait provenant de site de production situés à une distance comprise entre 70 et 300km, de préférence entre 100 et 200km, préférentiellement entre 120 et 180 km. En effet, les installations nécessaires à l'étape de séchage sont particulièrement onéreuses et le séchage d'une quantité de lait plus importante que la quantité traditionnellement disponible dans la zone de collecte autour du site de séchage permet d'augmenter la rentabilité du site de séchage et d'utiliser de façon plus efficace les installations nécessaires à l'étape de séchage.

Dans un mode de réalisation, l'étape de concentration s'effectue par évaporation à chaud, ou par osmose inverse ou par évaporation sous vide.

Dans un mode de réalisation préféré, le concentrateur est un évaporateur sous-vide fonctionnant à une température comprise entre 70°C et 75°C, de préférence entre 71 et 74°C, plus particulièrement autour de 72°C.

Dans un mode de réalisation, l'étape de séchage du lait concentré par pulvérisation s'effectue dans un sécheur atomiseur ou dans un sécheur à buses à plusieurs étages dans ladite installation de séchage. Plus particulièrement, le sécheur atomiseur ou sécheur à buses comporte deux ou trois étages, chacun fonctionnant dans des conditions identiques ou différentes.

Dans un autre mode de réalisation, le procédé selon la présente invention comprend en outre une étape d'écrémage éventuellement suivie d'une étape de standardisation avant l'étape de préconcentration et si elle est présente, avant une étape de pasteurisation, au moyen d'un dispositif d'écrémage, comme par exemple un séparateur centrifuge.

Dans encore un autre mode de réalisation, le procédé selon la présente invention comprend en outre une étape de pasteurisation, avant l'étape de préconcentration dans une tour de pasteurisation, à une température d'au moins 72°C pendant une période de temps comprise entre 10 et 60 secondes, plus préférentiellement entre 12 et 40 secondes, plus particulièrement entre 13 et 30 secondes et encore plus préférentiellement entre 15 et 20 secondes.

Dans un mode de réalisation du procédé selon la présente invention, la première distance est supérieure à 1 km, de préférence supérieure à 5 km, préférentiellement supérieure à 15 km. Les fonctions du site de rassemblement et de la série de sites de production sont différentes. Chaque site de production représente la localisation d'un cheptel de vache et se situe en zone agricole, au plus près des sources alimentaires pour les vaches, par exemples des prairies et des pâturages tandis que le site de rassemblement possède l'équipement permettant de procéder à l'étape de pré-concentration, et se trouve près d'un axe routier permettant le transport du lait pré-concentré. Ces deux sites répondent à des besoins différents et sont séparé d'une distance d'au moins 1 kilomètre, de préférence d'au moins 5 km, préférentiellement supérieur à 15 km.

Dans un mode de réalisation du procédé selon la présente invention, le système à osmose inverse à une surface de filtration totale comprise entre 60 et 140 m², de préférence entre 70 et 130 m² par osmoseur. La surface de filtration est un facteur important à considérer lorsqu'on évalue la performance d'un osmoseur. La surface de filtration est liée à la quantité de lait à traiter. La surface de filtration influe également sur le débit d'eau et de lait pré-concentré que l'osmoseur peut produire. La surface de filtration totale comprise entre 60 et 140 m², de préférence entre 70 et 130 m² par osmoseur permettent de traiter et d'obtenir une quantité et des débits permettent une utilisation de ce système dans un procédé de production de lait en poudre.

D'autres modes de réalisation du procédé suivant l'invention sont indiquées dans les revendications annexées.

### Brève description des dessins

D'autres caractéristiques, détails et avantages de l'invention ressortiront de la description donnée ci-après, à titre non limitatif et en faisant référence aux dessins et aux exemples.
La figure 1 est un organigramme de principe expliquant la succession d'étapes mises en œuvre dans le procédé de fabrication de lait en poudre selon la présente invention
La figure 2 est un organigramme schématisant un mode de réalisation du procédé selon la présente invention.
La figure 3 est un organigramme schématisant un autre mode de réalisation du procédé selon la présente invention.
La figure 4 est un organigramme schématisant encore un autre mode de réalisation du procédé selon la présente invention. Sur les figures, les éléments identiques ou analogues portent les mêmes références

### Description détaillée d'une réalisation de l'invention

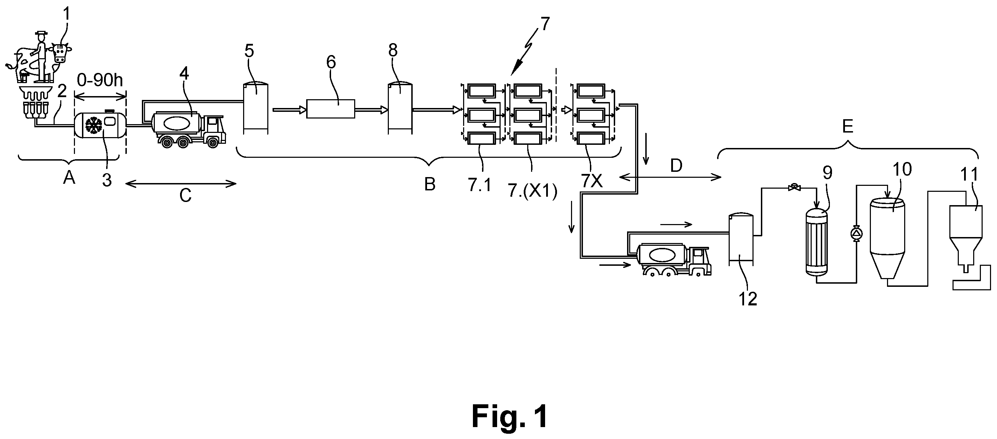

Le procédé selon la présente invention comporte une série d'étape qui sont représentées schématiquement à la figure 1.

Comme on peut le voir à la figure 1, des fractions de lait entier 2 sont produites par un cheptel de vaches laitières 1 sur un site de production A. Le lait ainsi produit est rassemblé dans un conteneur 3 en vue de sa collecte.

Plus particulièrement, ladite étape de maturation de chaque fraction de lait entier 2 de ladite série de fractions de lait entier au site de production A comprend au moins une première sous-maturation et une deuxième sous-maturation d'une première sous-fraction de chaque fraction de lait entier, chacune d'une durée de 0 à 30 heures, plus particulièrement de 6 à 30 heures, de préférence d'environ 24 heures et une première sous-maturation d'une deuxième sous-fraction de chaque fraction de lait entier d'une durée de 0 à 30 heures plus particulièrement de 6 à 30 heures, de préférence d'environ 24 heures.

En effet, la collecte étant espacée durant la présente invention et pas nécessairement quotidienne, le conteneur 3 contient le lait 2 de la traite des vaches du cheptel de vaches laitières 1 de plusieurs jours. Il contient donc le lait 2 du premier jour et le lait 2 du deuxième jour. Dans ce cas de figure, le lait 2 du premier jour reste plus longtemps dans le conteneur 3 que le lait 2 du deuxième jour (jour de la collecte).

La première sous fraction de chaque fraction de lait entier représente de 40 à 50% de chaque fraction de lait entier de ladite série de lait entier.

La deuxième sous fraction de chaque fraction de lait entier 2 représente de 40 à 50% de chaque fraction de lait entier de ladite série de lait entier.

Dans une variante selon la présente invention, ladite étape de maturation de chaque fraction de lait entier 2 de ladite série de fractions de lait entier 2 au site de production A comprend au moins une première sous-maturation, une deuxième sous-maturation et une troisième sous-maturation consécutives d'une première sous-fraction de chaque fraction de lait entier, chacune d'une durée de ° à 30 heures, plus particulièrement de 6 à 30 heures, de préférence d'environ 24 heures, une première sous-maturation et une deuxième sous-maturation consécutives d'une deuxième sous-fraction de chaque fraction de lait entier, chacune d'une durée de 0 à 30 heures, plus particulièrement de 6 à 30 heures, de préférence d'environ 24 heures , une première sous-maturation d'une troisième sous fraction de chaque fraction de lait entier, d'une durée de 0 à 30 heures, plus particulièrement de 6 à 30 heures, de préférence d'environ 24 heures.

En effet, la collecte étant espacée durant la présente invention et pas nécessairement quotidienne, le conteneur 3 contient le lait 2 de la traite des vaches du cheptel de vaches laitières 1 de plusieurs jours. Il contient donc le lait 2 du premier jour, le lait 2 du deuxième jour et le lait 2 du troisième jour. Dans ce cas de figure, le lait 2 du premier jour reste plus longtemps dans le conteneur 3 que le lait 2 du deuxième jour, lui-même resté plus longtemps dans le conteneur 3 que le lait 2 du troisième jour (jour de la collecte).

La première sous fraction de chaque fraction de lait entier représente de 30 à 40% de chaque fraction de lait entier de ladite série de lait entier.

La deuxième sous fraction de chaque fraction de lait entier représente de 30 à 40% de chaque fraction de lait entier de ladite série de lait entier.

La troisième sous fraction de chaque fraction de lait entier représente de 30 à 40% de chaque fraction de lait entier de ladite série de lait entier.

Les fractions de lait entier 2 sont ensuite collectées par un camion-citerne 4 qui se déplace du site de production A vers un site de rassemblement B. La distance C séparant le site de production A et le site de rassemblement B est inscrite dans un rayon de collecte du site de rassemblement. Les fractions de lait entier 2 sont alors déplacées sur la distance C qui correspond à la première distance. Les fractions collectées et transportées sont alors rassemblées dans une étape de rassemblement pour former un lot de lait au site de rassemblement B, Le rassemblement est réalisé dans une cuve de stockage 5, alimentée par le lait contenu dans le camion-citerne 4.

Une ou plusieurs étapes de traitement 6 du lot de lait entier peuvent ainsi avoir lieu en aval du rassemblement, comme une standardisation, une ou plusieurs analyses, une pasteurisation, un écrémage, intégral ou partiel selon que l'on souhaite un lait en poudre entier, demi-écrémé ou écrémé. Le lait issu du traitement du lot de lait est ensuite stocké dans une cuve de stockage intermédiaire 8. Le lait ainsi traité est introduit dans une dans une étape de pré-concentration dans un système à osmose inverse 7.

Le lait traité du lot de lait, entier, ou au moins partiellement écrémé est introduit dans un premier étage 7.1 du système à osmose inverse formant un premier préconcentrat. Le système à osmose inverse comprend un nombre x d'étage, 7.1, 7.2, 7.(x-1), **...** 7.x et à l'issue de chaque étage, un préconcentrat est obtenu, respectivement un premier, un deuxième, un (x-1)ième préconcentrat et enfin un xième préconcentrat qui forme le lait préconcentré.

Selon la présente invention, x est compris entre 2 et 10, de préférence entre 2 et 9, plus particulièrement entre 4 et 8, encore plus particulièrement entre 5 et 7.

Chaque étape 7.1, 7.2, 7.(x-1), **...** 7.x comprend un nombre prédéfini de tubes horizontal d'où sort une fraction fluidique. Les étages peuvent comporter un nombre n identique ou différents de tubes. Lorsque le lait passe dans le système à osmose inverse, il subit ainsi un passage dans le premier étage où se produit une répartition du lot de lait dans les n tubes horizontaux dudit premier étage. Ensuite, il passe dans un étage suivant, appelé xième étage avant d'atteindre le dernier étage.

Lorsque le nombre de tubes horizontaux n est identique dans chaque étage, le premier préconcentrat est formé de chacune des fractions fluidiques sortant de n tubes horizontaux du premier étage, rassemblées et homogénéisées, le xième préconcentrat est formé de chacune des fractions fluidiques sortant des n tubes horizontaux du xième étage, rassemblées et homogénéisées, le lait préconcentré étant formé des fractions fluidiques sortant des n tubes horizontaux du dernier étage, rassemblées et homogénéisées.

Chaque xième étage comprend une répartition du (x-1)^{ième} préconcentrat dans les n tubes horizontaux, c'est-à-dire une répartition du préconcentrat précédent. Le passage dans le dernier étage du système à osmose inverse comprend une répartition du préconcentrat précédent dans les n tubes horizontaux et forme le lait préconcentré.

Lorsque le nombre de tubes horizontaux dans chaque étage n'est pas identique, alors, le premier étage comprend t1 tubes horizontaux, les x étages comprennent tx tubes horizontaux et le dernier étage comprend t(x+1) tubes horizontaux, le passage dans ledit premier étage comprenant une répartition du lot de lait dans les t1 tubes horizontaux dudit premier étage dudit système à osmose inverse, le passage dans chaque xième étage comprenant une répartition du (x-1)^{ième} préconcentrat dans les tx tubes horizontaux, le passage dans le dernier étage dudit système à osmose inverse comprenant une répartition du préconcentrat précédent dans les t(x+1) tubes horizontaux.

Ainsi, le premier préconcentrat est formé de chacune des fractions fluidiques sortant des t1 tubes horizontaux du premier étage, rassemblées et homogénéisées, le xième préconcentrat est formé de chacune des fractions fluidiques sortant des tx tubes horizontaux du xième étage, rassemblées et homogénéisées, le lait préconcentré étant formé des fractions fluidiques sortant des t(x+1) tubes horizontaux du dernier étage, rassemblées et homogénéisées.

Il est également prévu selon la présente invention que le premier étage comporte un nombre de tube donné, différent ou identique du nombre de tube des x étages, et également identique ou différent du nombre de tubes du dernier étage. Le nombre de tubes horizontaux dans les x étages peut également être le même pour chacun des x étages, mais également différent.

Dans le système à osmose inverse du procédé selon la présente invention, la pression en fin de dernier étage est comprise entre 43 et 55 bar, plus particulièrement entre 44 et 52 bar, de préférence entre 45 et 50 bar.

Le lait préconcentré sortant du système à osmose inverse contient une quantité de matière sèche de 30 à 38% en poids de matière sèche par rapport au poids de lait préconcentré, plus particulièrement de 32 à 36% en poids de matière sèche par rapport au poids de lait préconcentré, de préférence 34% en poids de matière sèche par rapport au poids de lait préconcentré.

Dans le procédé selon la présente invention, le lait préconcentré est déplacé pendant une étape de déplacement du lait préconcentré du site de rassemblement vers le site de séchage E distant du site de rassemblement B d'une deuxième distance D, supérieure à la première distance C.

Le lait préconcentré subit alors une étape de concentration 9 à un site de séchage. La concentration du lait préconcentré peut-être réaliser de différentes manières, par exemple par osmose inverse, par un évaporateur à chaud ou par un évaporateur sous-vide. À l'issue de l'étape de concentration du lait préconcentré audit un site de séchage on obtient un lait concentré comprenant de 50 à 57% en poids de matière sèche par rapport au poids de lait concentré, plus particulièrement de 52 à 56% en poids de matière sèche par rapport au poids de lait concentré, de préférence 54% en poids de matière sèche par rapport au poids de lait concentré.

Le procédé selon la présente invention comprend également une étape de séchage du lait concentré par pulvérisation dans une installation de séchage 10 au site de séchage. Le séchage est réalisé jusqu'à obtention de lait en poudre présentant une teneur en matière sèche de plus de 95% en poids par rapport au poids de lait en poudre, plus particulièrement une teneur en matière sèche de plus de 96% en poids par rapport au poids de lait en poudre, de préférence de plus de 97% en poids par rapport au poids de lait en poudre, voire même de plus de 98% en poids par rapport au poids de lait en poudre.

Le lait en poudre est ensuite conditionné dans une installation de conditionnement 11.

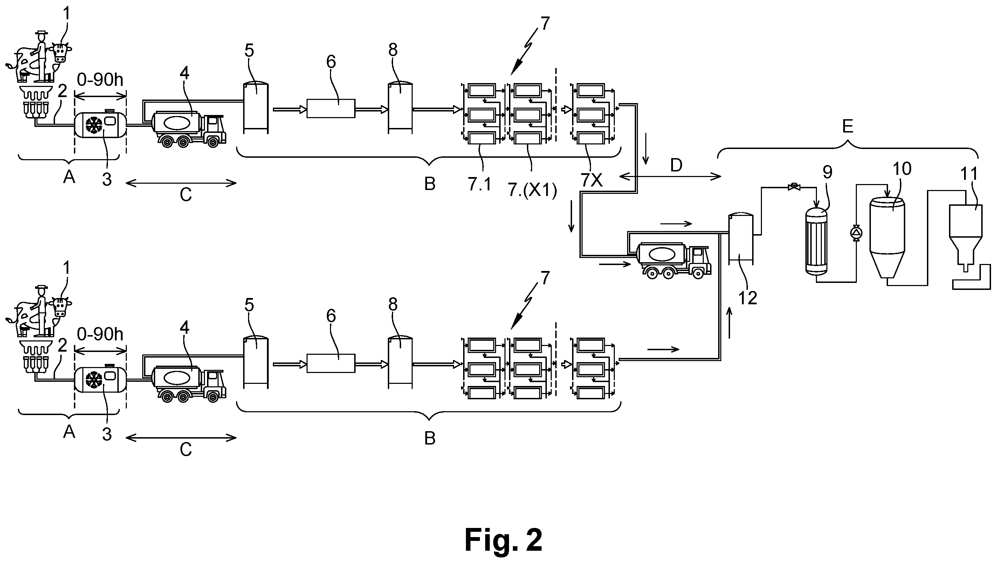

La figure 2 est un organigramme schématisant un mode de réalisation du procédé selon la présente invention.

Comme on peut le voir à la figure 2 le site de séchage E peut également comporter son propre site de rassemblement, lui-même approvisionné par sa propre collecte C en provenant d'une série de sites de production A. Ceci permet d'approvisionner en suffisance le site de séchage E par plusieurs sites de rassemblement. Selon le mode de réalisation illustré, le site de séchage est approvisionné par un site de rassemblement B localisé à une distance D du site de séchage E et un site de rassemblement localisé au site de séchage E.

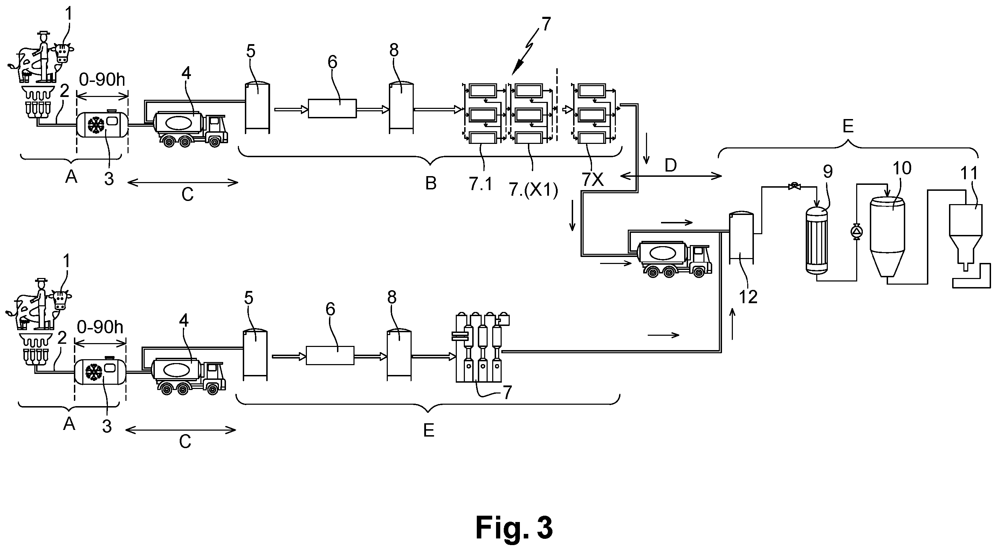

La figure 3 est un organigramme schématisant mode de réalisation semblable au mode de réalisation illustré à la figure 2 dans lequel sur le site de séchage, le dispositif de préconcentration est un évaporateur.

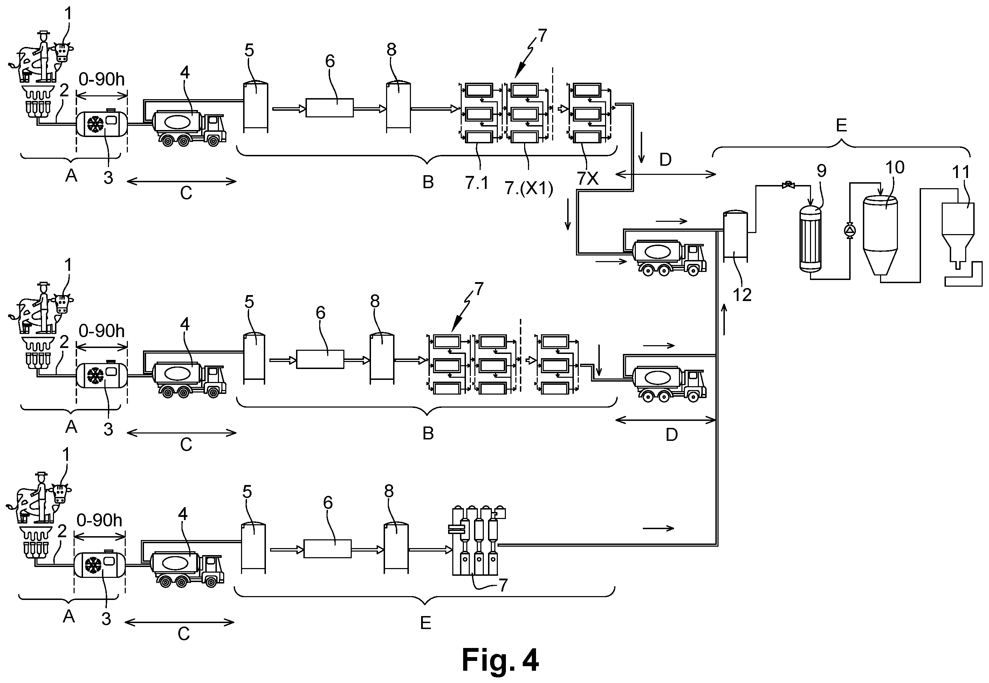

La figure 4 est un organigramme schématisant encore un autre mode de réalisation du procédé selon la présente invention et illustrant un mode de réalisation où le site de séchage E comporte son propre site de rassemblement, lui-même approvisionné par sa propre collecte C en provenant d'une série de sites de production A. Le site de séchage est approvisionné par deux sites de rassemblement B localisés à une distance D du site de séchage E et un site de rassemblement localisé au site de séchage E.

D'autres caractéristiques et avantages de la présente invention seront tirés de la description non limitative qui suit, et en faisant référence aux dessins et aux exemples.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de production de lait en poudre à partir d'une série de fractions de lait entier produit par une série de cheptels de vaches laitières d'une série de sites de production, chaque cheptel de vaches laitières étant localisé en un site de production, le procédé comprenant les étapes suivantes :
- une étape de collecte d'une série de fractions de lait entier de la série de sites de production avec déplacement de ladite série de fractions de lait entier sur une première distance pour amener la série de fractions de lait entier à un site de rassemblement,
- une étape de rassemblement des fractions de ladite série de fractions de lait entier pour former un lot de lait au site de rassemblement,
- une étape de concentration du lait à un site de séchage,
- une étape de séchage du lait concentré par pulvérisation dans une installation de séchage au site de séchage avec obtention de lait en poudre présentant une teneur en matière sèche de plus de 95% en poids par rapport au poids de lait en poudre, plus particulièrement une teneur en matière sèche de plus de 96% en poids par rapport au poids de lait en poudre, de préférence de plus de 97% en poids par rapport au poids de lait en poudre, voire même de plus de 98% en poids par rapport au poids de lait en poudre,
**caractérisé en ce que** ladite série de fractions de lait entier de l'étape de collecte et de l'étape de rassemblement est une série de fractions de lait entier maturé, le procédé comprenant en outre, préalablement à la collecte, une série d'étapes de maturation de chaque fraction de lait entier de ladite série de fractions de lait entier au site de production, pour former la série de fractions de lait entier maturé, et postérieurement à l'étape de rassemblement, successivement, une étape de préconcentration du lot de lait au site de rassemblement jusqu'à obtention d'un lait préconcentré comprenant de 30 à 38% en poids de matière sèche par rapport au poids de lait préconcentré, plus particulièrement de 32 à 36% en poids de matière sèche par rapport au poids de lait préconcentré, de préférence 34% en poids de matière sèche par rapport au poids de lait préconcentré, l'étape de préconcentration du lait comprend :
- un passage de lait du lot de lait, dans un premier étage d'un système à osmose inverse formant un premier préconcentrat,
- un passage d'un (x-1)^{ième} préconcentrat dans un x^{ième} étage dudit système à osmose inverse, chaque xième étage dudit système à osmose inverse formant un x^{ième} préconcentrat, où x est compris entre 2 et 10, de préférence entre 2 et 9, plus particulièrement entre 4 et 8, encore plus particulièrement entre 5 et 7,
- un passage dans un dernier étage dudit système à osmose inverse du préconcentrat précédent dans lequel la pression en fin de dernier étage est comprise entre 43 et 55 bar, plus particulièrement entre 44 et 52 bar, de préférence entre 45 et 50 bar, formant le lait préconcentré,
- une étape de déplacement du lait préconcentré du site de rassemblement vers le site de séchage distant du site de rassemblement d'une deuxième distance, supérieure à la première distance,
- et dans lequel, l'étape de concentration du lait au site de séchage est une étape de concentration du lait préconcentré audit un site de séchage jusqu'à obtention d'un lait concentré comprenant de 50 à 57% en poids de matière sèche par rapport au poids de lait concentré, plus particulièrement de 52 à 56% en poids de matière sèche par rapport au poids de lait concentré, de préférence 54% en poids de matière sèche par rapport au poids de lait concentré.

2. Procédé selon la revendication 1, dans lequel ladite étape de maturation de chaque fraction de lait entier de ladite série de fractions de lait entier au site de production comprend au moins une première sous-maturation et une deuxième sous-maturation d'une première sous-fraction de chaque fraction de lait entier, chacune d'une durée de 0 à 30 heures, plus particulièrement de 6 à 30 heures, de préférence d'environ 24 heures et une première sous-maturation d'une deuxième sous-fraction de chaque fraction de lait entier d'une durée de 0 à 30 heures, plus particulièrement de 6 à 30 heures, de préférence d'environ 24 heures.

3. Procédé selon la revendication 1, dans lequel ladite étape de maturation de chaque fraction de lait entier de ladite série de fractions de lait entier au site de production comprend au moins une première sous-maturation, une deuxième sous-maturation et une troisième sous-maturation consécutives d'une première sous-fraction de chaque fraction de lait entier, chacune d'une durée de 0 à 30 heures, plus particulièrement de 6 à 30 heures, de préférence d'environ 24 heures, une première sous-maturation et une deuxième sous-maturation consécutives d'une deuxième sous-fraction de chaque fraction de lait entier, chacune d'une durée de 0 à 30 heures, plus particulièrement de 6 à 30 heures, de préférence d'environ 24 heures, une première sous-maturation d'une troisième sous fraction de chaque fraction de lait entier, d'une durée de 0 à 30 heures, plus particulièrement de 6 à 30 heures, de préférence d'environ 24 heures.

4. Procédé selon la revendication 2 ou 3, dans lequel la première sous fraction de chaque fraction de lait entier représente de 30 à 50% de chaque fraction de lait entier de ladite série de lait entier et/ou dans lequel la deuxième sous fraction de chaque fraction de lait entier représente de 30 à 50% de chaque fraction de lait entier de ladite série de lait entier, et/ou dans lequel la troisième sous fraction de chaque fraction de lait entier représente de 10 à 40% de chaque fraction de lait entier de ladite série de lait entier.

5. Procédé selon l'une quelconque des revendications 1 à 4, dans lequel la première distance (C) est inférieure à 130 km, plus préférentiellement inférieure à 100 km, plus particulièrement inférieure à 75 km, tout particulièrement inférieure à 50 kilomètres, de préférence inférieure à 40 kilomètres.

6. Procédé selon l'une quelconque des revendications précédentes, dans lequel le premier étage, les x étages et le dernier étage comprennent un nombre n identique de tubes horizontaux, le passage dans ledit premier étage comprenant une répartition du lot de lait dans les n tubes horizontaux dudit premier étage dudit système à osmose inverse, le passage dans chaque xième étage comprenant une répartition du (x-1)^{ième} préconcentrat dans les n tubes horizontaux, le passage dans le dernier étage dudit système à osmose inverse comprenant une répartition du préconcentrat précédent dans les n tubes horizontaux.

7. Procédé selon la revendication 6, dans lequel une fraction fluidique sort de chaque tube horizontal, le premier préconcentrat est formé de chacune des fractions fluidiques sortant de n tubes horizontaux du premier étage, rassemblées et homogénéisées, le xième préconcentrat est formé de chacune des fractions fluidiques sortant des n tubes horizontaux du xième étage, rassemblées et homogénéisées, le lait préconcentré étant formé des fractions fluidiques sortant des n tubes horizontaux du dernier étage, rassemblées et homogénéisées.

8. Procédé selon la revendication 7, dans lequel le premier étage comprend t1 tubes horizontaux, les x étages comprennent tx tubes horizontaux et le dernier étage comprend t(x+1) tubes horizontaux, le passage dans ledit premier étage comprenant une répartition du lot de lait entier dans les t1 tubes horizontaux dudit premier étage dudit système à osmose inverse, le passage dans chaque xième étage comprenant une répartition du (x-1)^{ième} préconcentrat dans les tx tubes horizontaux, le passage dans le dernier étage dudit système à osmose inverse comprenant une répartition du préconcentrat précédent dans les t(x+1) tubes horizontaux.

9. Procédé selon la revendication 8, dans lequel une fraction fluidique sort de chaque tube horizontal, le premier préconcentrat est formé de chacune des fractions fluidiques sortant des t1 tubes horizontaux du premier étage, rassemblées et homogénéisées, le xième préconcentrat est formé de chacune des fractions fluidiques sortant des tx tubes horizontaux du xième étage, rassemblées et homogénéisées, le lait préconcentré étant formé des fractions fluidiques sortant des t(x+1) tubes horizontaux du dernier étage, rassemblées et homogénéisées.

10. Procédé selon la revendication 8 ou 9, dans lequel chaque xième étage comprend un nombre identique ou différent de tx tubes horizontaux.

11. Procédé selon l'une quelconque des revendications précédentes, dans lequel la deuxième distance est comprise entre 140 et 300 km, de préférence entre 150 et 220 km, préférentiellement entre 160 et 200 km.

12. Procédé selon l'une quelconque des revendications précédentes, dans lequel l'étape de concentration s'effectue par évaporation à chaud, ou par osmose inverse ou par évaporation sous vide.

13. Procédé selon l'une quelconque des revendications précédentes, dans lequel l'étape de séchage du lait concentré par pulvérisation s'effectue dans un sécheur atomiseur à plusieurs étages dans ladite installation de séchage.

14. Procédé selon l'une quelconque des revendications précédentes, comprenant en outre une étape de pasteurisation, avant l'étape de préconcentration, dans une tour de pasteurisation, à une température d'au moins 72°C pendant une période de temps comprise entre 10 et 60 secondes, plus préférentiellement entre 12 et 40 secondes, plus particulièrement entre 13 et 30 secondes et encore plus préférentiellement entre 15 et 20 secondes.

15. Procédé selon l'une quelconque des revendications précédentes, comprenant en outre une étape d'écrémage éventuellement suivie d'une étape de standardisation avant l'étape de préconcentration et si elle est présente, avant une étape de pasteurisation, au moyen d'un dispositif d'écrémage, comme par exemple un séparateur centrifuge.

## Patentansprüche

1. Verfahren zur Herstellung von Milchpulver anhand einer Reihe von Vollmilchfraktionen, die von einer Reihe von Milchkuhherden in einer Reihe von Produktionsstätten erzeugt werden, wobei sich jede Milchkuhherde an einem Produktionsstätte befindet, das Verfahren umfassend die folgenden Schritte:
- einen Einsammelschritt einer Reihe von Vollmilchfraktionen der Reihe von Produktionsstätten mit Bewegen der Reihe von Vollmilchfraktionen über eine erste Strecke, um die Reihe von Vollmilchfraktionen zu einer Sammelstelle zu bringen,
- einen Sammelschritt der Fraktionen der Reihe von Vollmilchfraktionen, um an der Sammelstelle eine Milchcharge zu bilden,
- einen Konzentrationsschritt der Milch an einer Trocknungsstelle,
- einen Trocknungsschritt der konzentrierten Milch durch Pulverisieren in einer Trocknungsanlage an der Trocknungsstelle mit Erlangen von Milchpulver, das einen Trockenmassegehalt von mehr als 95 Gewichts-%, bezogen auf das Milchpulvergewicht, insbesondere einem Trockenmassegehalt von mehr als 96 Gewichts-%, bezogen auf das Milchpulvergewicht, vorzugsweise von mehr als 97 Gewichts-%, bezogen auf das Milchpulvergewicht, oder sogar von mehr als 98 Gewichts-%, bezogen auf das Milchpulvergewicht, aufweist,
**dadurch gekennzeichnet, dass** die Reihe von Vollmilchfraktionen des Einsammelschritts und des Sammelschritts eine Reihe von gereiften Vollmilchfraktionen ist, das Verfahren ferner umfassend vor dem Einsammeln eine Reihe von Reifungsschritten jeder Vollmilchfraktion der Reihe von Vollmilchfraktionen an der Produktionsstätte, um die Reihe von gereiften Vollmilchfraktionen zu bilden, und nach dem Sammelschritt nacheinander, einen Vorkonzentrationsschritt der Milchcharge an der Sammelstelle bis zum Erlangen einer vorkonzentrierten Milch, umfassend 30 bis 38 Gewichts-% Trockenmasse, bezogen auf das Gewicht vorkonzentrierter Milch, insbesondere 32 bis 36 Gewichts-% Trockenmasse, bezogen auf das Gewicht vorkonzentrierter Milch, vorzugsweise 34 Gewichts-% Trockenmasse, bezogen auf das Gewicht vorkonzentrierter Milch, wobei der Vorkonzentrationsschritt der Milch Folgendes umfasst:
- ein Leiten von Milch der Milchcharge in eine erste Stufe eines Umkehrosmosesystems, was ein erstes Vorkonzentrat bildet,
- ein Leiten eines (x-1)-ten Vorkonzentrats in eine x-te Stufe des Umkehrosmosesystems, wobei jede x-te Stufe des Umkehrosmosesystems ein x-tes Vorkonzentrat bildet, wobei x zwischen 2 und 10, vorzugsweise zwischen 2 und 9, insbesondere zwischen 4 und 8, noch bevorzugter zwischen 5 und 7 liegt,
- ein Leiten in eine letzte Stufe des Umkehrosmosesystems des vorherigen Vorkonzentrats, wobei der Druck am Ende der letzten Stufe zwischen 43 und 55 bar, insbesondere zwischen 44 und 52 bar, vorzugsweise zwischen 45 und 50 bar liegt, was die vorkonzentrierte Milch bildet,
- einen Bewegungsschritt der vorkonzentrierten Milch von der Sammelstelle zu der Trocknungsstelle, die um eine zweite Distanz, die größer als die erste Distanz ist, von der Sammelstelle entfernt ist,
- und wobei der Konzentrationsschritt der Milch an der Trocknungsstelle ein Konzentrationsschritt der vorkonzentrierten Milch an der genannten Trocknungsstelle bis Erlangen einer konzentrierten Milch ist, umfassend 50 bis 57 Gewichts-% Trockenmasse, bezogen auf das Gewicht konzentrierter Milch, insbesondere 52 bis 56 Gewichts-% Trockenmasse, bezogen auf das Gewicht konzentrierter Milch, vorzugsweise 54 Gewichts-% Trockenmasse, bezogen auf das Gewicht konzentrierter Milch.

2. Verfahren nach Anspruch 1, wobei der Reifungsschritt jeder Vollmilchfraktion aus der Reihe von Vollmilchfraktionen an der Produktionsstätte mindestens eine erste Teilreifung und eine zweite Teilreifung einer ersten Teilfraktion jeder Vollmilchfraktion, jede mit einer Dauer von 0 bis 30 Stunden, insbesondere 6 bis 30 Stunden, vorzugsweise etwa 24 Stunden, und eine erste Teilreifung einer zweiten Teilfraktion jeder Vollmilchfraktion, jede einer Dauer von 0 bis 30 Stunden, insbesondere 6 bis 30 Stunden, vorzugsweise etwa 24 Stunden, umfasst.

3. Verfahren nach Anspruch 1, wobei der Reifungsschritt jeder Vollmilchfraktion der Reihe von Vollmilchfraktionen an der Produktionsstätte mindestens eine erste Teilreifung, eine zweite Teilreifung und eine dritte aufeinanderfolgende Teilreifung einer ersten Teilfraktion jeder Vollmilchfraktion, jede mit einer Dauer von 0 bis 30 Stunden, insbesondere 6 bis 30 Stunden, vorzugsweise etwa 24 Stunden, eine aufeinanderfolgende erste Teilreifung und zweite Teilreifung einer zweiten Teilfraktion jeder Vollmilchfraktion, jede mit einer Dauer von 0 bis 30 Stunden, insbesondere 6 bis 30 Stunden, vorzugsweise etwa 24 Stunden, eine erste Teilreifung einer dritten Teilfraktion jeder Vollmilchfraktion, mit einer Dauer von 0 bis 30 Stunden, insbesondere 6 bis 30 Stunden, vorzugsweise etwa 24 Stunden, umfasst.

4. Verfahren nach Anspruch 2 oder 3, wobei die erste Teilfraktion jeder Vollmilchfraktion 30 bis 50 % jeder Vollmilchfraktion der Reihe von Vollmilch darstellt, und/oder wobei die zweite Teilfraktion jeder Vollmilchfraktion 30 bis 50 % jeder Vollmilchfraktion der Reihe von Vollmilch darstellt, und/oder wobei die dritte Teilfraktion jeder Vollmilchfraktion 10 bis 40 % jeder Vollmilchfraktion der Reihe von Vollmilch darstellt.

5. Verfahren nach einem der Ansprüche 1 bis 4, wobei die erste Distanz (C) weniger als 130 km, bevorzugter weniger als 100 km, noch bevorzugter weniger als 75 km, insbesondere bevorzugt weniger als 50 km, vorzugsweise weniger als 40 km ist.

6. Verfahren nach einem der vorherigen Ansprüche, wobei die erste Stufe, die x Stufen und die letzte Stufe eine identische Anzahl n von horizontalen Rohren umfassen, wobei das Leiten in die erste Stufe eine Verteilung der Milchcharge in die n horizontalen Rohre der ersten Stufe des Umkehrosmosesystems umfasst, wobei das Leiten in jede x-te Stufe eine Verteilung des (x-1)-ten Vorkonzentrats in den n horizontalen Rohren umfasst, das Leiten in die letzte Stufe des Umkehrosmosesystems eine Verteilung des vorherigen Vorkonzentrats in den n horizontalen Rohren umfasst.

7. Verfahren nach Anspruch 6, wobei eine Fluidfraktion aus jedem horizontalen Rohr austritt, das erste Vorkonzentrat aus jeder der Fluidfraktionen gebildet wird, die aus n horizontalen Rohren der ersten Stufe austreten, gesammelt und homogenisiert werden, das x-te Vorkonzentrat aus jeder der Fluidfraktionen gebildet wird, die aus den n horizontalen Rohren der x-ten Stufe austreten, gesammelt und homogenisiert werden, die vorkonzentrierte Milch aus den Fluidfraktionen gebildet wird, die aus den n horizontalen Rohren der letzten Stufe austreten, gesammelt und homogenisiert werden.

8. Verfahren nach Anspruch 7, wobei die erste Stufe t1 horizontale Rohre umfasst, die x Stufen tx horizontale Rohre umfassen und die letzte Stufe t(x+1) horizontale Rohre umfasst, wobei das Leiten in die erste Stufe eine Verteilung der Vollmilchcharge in die t1 horizontalen Rohre der ersten Stufe des Umkehrosmosesystems umfasst, das Leiten in jede x-te Stufe eine Verteilung des (x-1)-ten Vorkonzentrats in die tx horizontalen Rohre umfasst, das Leiten in die letzte Stufe des Umkehrosmosesystems eine Verteilung des vorherigen Vorkonzentrats in die t(x+1) horizontalen Rohre umfasst.

9. Verfahren nach Anspruch 8, wobei eine Fluidfraktion aus jedem horizontalen Rohr austritt, das erste Vorkonzentrat aus jeder der Fluidfraktionen gebildet wird, die aus t1 horizontalen Rohren der ersten Stufe austreten, gesammelt und homogenisiert werden, das x-te Vorkonzentrat aus jeder der Fluidfraktionen gebildet wird, die aus den tx horizontalen Rohren der x-ten Stufe austreten, gesammelt und homogenisiert werden. wobei die vorkonzentrierte Milch aus den Fluidfraktionen gebildet wird, die aus den t(x+1) horizontalen Rohren der letzten Stufe austreten, gesammelt und homogenisiert werden.

10. Verfahren nach Anspruch 8 oder 9, wobei jede x-te Stufe eine gleiche oder verschiedene Anzahl von tx horizontalen Röhren umfasst.

11. Verfahren nach einem der vorherigen Ansprüche, wobei die zweite Distanz zwischen 140 und 300 km, vorzugsweise zwischen 150 und 220 km, bevorzugt zwischen 160 und 200 km liegt.

12. Verfahren nach einem der vorherigen Ansprüche, wobei der Konzentrationsschritt durch Heißverdampfung oder durch Umkehrosmose oder durch Vakuumverdampfung erfolgt.

13. Verfahren nach einem der vorherigen Ansprüche, wobei der Trocknungsschritt der konzentrierten Milch durch Pulverisieren in einem mehrstufigen Sprühtrockner in der Trocknungsanlage erfolgt.

14. Verfahren nach einem der vorherigen Ansprüche, ferner umfassend einen Pasteurisierungsschritt vor dem Vorkonzentrationsschritt in einem Pasteurisierungsturm bei einer Temperatur von mindestens 72 °C über eine Zeitdauer zwischen 10 und 60 Sekunden, bevorzugter zwischen 12 und 40 Sekunden, insbesondere zwischen 13 und 30 Sekunden und noch bevorzugter zwischen 15 und 20 Sekunden.

15. Verfahren nach einem der vorherigen Ansprüche, ferner umfassend einen Entrahmungsschritt, optional gefolgt von einem Standardisierungsschritt vor dem Vorkonzentrationsschritt und, wenn vorhanden, vor einem Pasteurisierungsschritt, mittels einer Entrahmungsvorrichtung, wie z. B. einem Zentrifugalabscheider.

## Claims

1. Method for producing milk powder from a series of whole milk fractions produced by a series of dairy herds from a series of production sites, each dairy herd being located at a production site, the method comprising the following steps:
- a step of collecting a series of whole milk fractions from a series of production sites, with the movement of said series of whole milk fractions over an initial distance to bring the series of whole milk fractions to a combining site,
- a step of combining the fractions of said series of whole milk fractions to form a batch of milk at the combining site,
- a step of concentrating the milk at a drying site,
- a step of drying concentrated milk via spraying in a drying installation at the drying site so as to obtain milk powder having a dry matter content of more than 95% by weight relative to the weight of milk powder, more particularly a dry matter content of more than 96% by weight relative to the weight of milk powder, preferably more than 97% by weight relative to the weight of milk powder, or even more than 98% by weight relative to the weight of milk powder,
**characterised in that** said series of whole milk fractions from the collection and combining steps is a series of matured whole milk fractions, the method further comprising, prior to collection, a series of maturation stages for each whole milk fraction of said series of whole milk fractions at the production site, to form the series of matured whole milk fractions, and subsequent to the assembling stage, successively, a pre-concentration stage for the batch of milk at the combining site until a pre-concentrated milk is obtained comprising 30 to 38% by weight of dry matter relative to the weight of pre-concentrated milk, more particularly 32 to 36% by weight of dry matter relative to the weight of pre-concentrated milk, preferably 34% by weight of dry matter relative to the weight of pre-concentrated milk, the milk pre-concentration stage comprising:
- passing a batch of milk through a first stage of a reverse osmosis system to form a first pre-concentrate;
- passing a (x-1)^{th} pre-concentrate through an x^{th} stage of said reverse osmosis system, each xth stage of said reverse osmosis system forming an x^{th} pre-concentrate, where x is between 2 and 10, preferably between 2 and 9, more particularly between 4 and 8, and even more particularly between 5 and 7;
- passing the preceding pre-concentrate through a final stage of said reverse osmosis system, wherein the pressure at the end of the final stage is between 43 and 55 bar, more particularly between 44 and 52 bar, preferably between 45 and 50 bar, forming the pre-concentrated milk;
- a step of moving the pre-concentrated milk from the collection site to the drying site, located a second distance from the combining site, which is greater than the first distance;
- and wherein the milk concentration step at the drying site is a step of concentrating the pre-concentrated milk at said drying site until a concentrated milk is obtained comprising 50 to 57% by weight of dry matter relative to the weight of concentrated milk, more particularly 52 to 56% by weight of dry matter relative to the weight of concentrated milk, preferably 54% by weight of dry matter relative to the weight of concentrated milk.

2. Method according to claim 1, wherein said maturation step of each whole milk fraction of said series of whole milk fractions at the production site comprises at least a first sub-maturation and a second sub-maturation of a first sub-fraction of each whole milk fraction, each lasting from 0 to 30 hours, more particularly from 6 to 30 hours, preferably about 24 hours, and a first sub-maturation of a second sub-fraction of each whole milk fraction lasting from 0 to 30 hours, more particularly from 6 to 30 hours, preferably about 24 hours.

3. Method according to claim 1, wherein said maturation step of each whole milk fraction of said series of whole milk fractions at the production site comprises at least a first sub-maturation, a second sub-maturation, and a third consecutive sub-maturation of a first sub-fraction of each whole milk fraction, each lasting from 0 to 30 hours, more particularly from 6 to 30 hours, preferably about 24 hours; a first and second consecutive sub-maturation of a second sub-fraction of each whole milk fraction, each lasting from 0 to 30 hours, more particularly from 6 to 30 hours, preferably about 24 hours; and a first sub-maturation of a third sub-fraction of each whole milk fraction, lasting from 0 to 30 hours, more particularly from 6 to 30 hours, preferably about 24 hours.

4. Method according to claim 2 or 3, wherein the first sub-fraction of each whole milk fraction represents 30 to 50% of each whole milk fraction in said whole milk series, and/or wherein the second sub-fraction of each whole milk fraction represents 30 to 50% of each whole milk fraction in said whole milk series, and/or wherein the third sub-fraction of each whole milk fraction represents 10 to 40% of each whole milk fraction in said whole milk series.

5. Method according to any one of claims 1 to 4, wherein the first distance (C) is less than 130 km, more preferably less than 100 km, more particularly less than 75 km, most particularly less than 50 km, preferably less than 40 km.

6. Method according to any one of the preceding claims, wherein the first stage, the x stages and the last stage comprise an identical number n of horizontal tubes, the passage through said first stage comprising a distribution of the batch of milk into the n horizontal tubes of said first stage of said reverse osmosis system, the passage through each xth stage comprising a distribution of the (x-1)th pre-concentrate into the n horizontal tubes, the passage through the last stage of said reverse osmosis system comprising a distribution of the preceding pre-concentrate into the n horizontal tubes.

7. Method according to claim 6, wherein a fluidic fraction exits each horizontal tube, the first pre-concentrate is formed from each of the fluidic fractions exiting n horizontal tubes of the first stage, combined and homogenised, the x^{th} pre-concentrate is formed from each of the fluidic fractions exiting the n horizontal tubes of the x^{th} stage, combined and homogenised, and the pre-concentrated milk is formed from the fluidic fractions exiting the n horizontal tubes of the last stage, combined and homogenised.

8. Method according to claim 7, wherein the first stage comprises t1 horizontal tubes, the x stages comprise tx horizontal tubes and the last stage comprises t(x+1) horizontal tubes, the passage through said first stage comprising a distribution of the batch of whole milk into the t1 horizontal tubes of said first stage of said reverse osmosis system, the passage through each x^{th} stage comprising a distribution of the (x-1)th pre-concentrate into the tx horizontal tubes, the passage through the last stage of said reverse osmosis system comprising a distribution of the preceding pre-concentrate into the t(x+1) horizontal tubes.

9. Method according to claim 8, wherein a fluidic fraction exits each horizontal tube, the first pre-concentrate is formed from each of the fluidic fractions exiting the t1 horizontal tubes of the first stage, combined and homogenised, the xth pre-concentrate is formed from each of the fluidic fractions exiting the tx horizontal tubes of the xth stage, combined and homogenised, the pre-concentrated milk being formed from the fluidic fractions exiting the t(x+1) horizontal tubes of the last stage, combined and homogenised.

10. Method according to claim 8 or 9, wherein each x^{th} stage comprises the same or a different number of tx horizontal tubes.

11. Method according to any one of the preceding claims, wherein the second distance is between 140 and 300 km, preferably between 150 and 220 km, preferably between 160 and 200 km.

12. Method according to any one of the preceding claims, wherein the concentration step is carried out by hot evaporation, reverse osmosis, or vacuum evaporation.

13. Method according to any one of the preceding claims, wherein the spray drying stage of the concentrated milk is carried out in a multistage spray dryer in said drying installation.

14. Method according to any one of the preceding claims, further comprising a pasteurisation step, prior to the pre-concentration step, in a pasteurisation unit, at a temperature of at least 72°C for a period of time between 10 and 60 seconds, more preferably between 12 and 40 seconds, more particularly between 13 and 30 seconds, and even more preferably between 15 and 20 seconds.

15. Method according to any one of the preceding claims, further comprising a skimming step, optionally followed by a standardisation step before the pre-concentration step and, if present, before a pasteurisation step, using a skimming device, such as a centrifugal separator.
